# EUROPEAN PATENT APPLICATION

(11) **EP 4 316 862 A1**
(43) Date of publication of application: **07.02.2024**
(21) Application number: 22780251.9
(22) Date of filing: 18.03.2022
(51) Int. Cl.: B43K 8/00, B43K 29/02

(54) **ATTACHMENT STRUCTURE IN WRITING TOOL, WRITING TOOL, AND SOFT MEMBER**

(30) Priority: 31.03.2021 JP 2021060240; 31.03.2021 JP 2021060241
(71) Applicant: Kabushiki Kaisha Pilot Corporation (also trading as Pilot Corporation), Tokyo 104-8304 (JP)
(72) Inventor: HAYAKAWA, Hisatoshi, Tokyo 104-8304 (JP); IWATA, Hisashi, Tokyo 104-8304 (JP)
(74) Representative: Hoffmann Eitle
(86) International application number: PCT/JP2022/012706
(87) International publication number: WO 2022/210036

(57) **Abstract**

An attachment structure in a writing instrument, includes: a first component; and a second component configured to be fitted into a fitting hole provided at an end of the first component, the second component including: a small-diameter portion; and a large-diameter portion disposed in front of the small-diameter portion; and a first outer step portion disposed between the small-diameter portion and the large-diameter portion, the fitting hole including: a small-diameter hole portion; and an inner step portion disposed in front of the small-diameter hole portion, the small-diameter portion being fitted into or loosely fitted into the small-diameter hole portion, the first outer step portion coming into contact with the inner step portion, the small-diameter hole portion includes a barb portion protruding from the inner face of the small-diameter hole portion, the barb portion being deformable by contact with the small-diameter portion when the second component is fitted.

## Description

### TECHNICAL FIELD

The present invention relates to an attachment structure in a writing instrument, the writing instrument, and a soft member.

### BACKGROUND ART

Patent Document 1 discloses a pen-core locking structure configured to insert a pen core from an opening of a tip of a shaft tube and fix the pen core, in which, in the entire perimeter of a pen-core holding hole having a circular transverse cross-section and disposed at the tip of the shaft tube, protrusions having a mountain-shaped transverse cross-section are provided in the longitudinal direction at regular intervals, and the height of the protrusions increases toward the rear side.

According to the pen-core locking structure, when the pen core has a circular or oval transverse cross-section, the tops of rear portions of the protrusions bite into the pen core to lock the pen core, or alternatively when the pen core has a rectangular cross section, such as a square or rectangular cross section, portions closer to the ridge of the pen core are each sandwiched between adjacent slopes of the adjacent protrusions so that the pen core is locked, whereby the pen core can be locked without undergoing processing such as stepping or kerfing.

### CITATION LIST

### Patent Literature

Patent Document 1: Japanese Utility Model (Registration) Application Laid-open Publication No. H1-161078

### SUMMARY OF INVENTION

### PROBLEM TO BE SOLVED BY THE INVENTION

In the configuration disclosed in Patent Document 1, when the pen core (a second component) is inserted from the tip of the shaft tube (a first component), the pen core is press-fitted into the shaft tube in a state in which the tops of rear portions of the protrusions bite into the pen core. Therefore, a great force is required for the insertion of the pen core, which may make it difficult to easily fit the pen core to the tip of the shaft tube.

In addition, in the configuration disclosed in Patent Document 1, the pen core is press-fitted into the shaft tube in the state where the top at the rear of each of the protrusions bites into the outer surface of the pen core, and, as a result, a scratch extending in the axial direction is formed on the outer surface of the pen core. Therefore, when an axially forward force (that is, a force in the direction in which a pen tip comes off) is applied to the pen core, there is a possibility that desired locking performance cannot be achieved and thereby the pen tip easily comes off.

In view of the above-described findings, the present invention has been made, and an object of the present invention is to provide an attachment structure in a writing instrument, the attachment structure being configured to make the fitting of a component easier while prevent the component from coming off after the fitting of the component.

### MEANS FOR SOLVING PROBLEM

An attachment structure according to the present invention is in a writing instrument, and includes: a first component; and a second component configured to be fitted into a fitting hole provided at an end of the first component, the second component including: a small-diameter portion; a large-diameter portion disposed in front of the small-diameter portion; and a first outer step portion disposed between the small-diameter portion and the large-diameter portion, the fitting hole including: a small-diameter hole portion; and an inner step portion disposed in front of the small-diameter hole portion, the small-diameter portion being fitted into or loosely fitted into the small-diameter hole portion, the first outer step portion coming into contact with the inner step portion, the small-diameter hole portion including a barb portion protruding from an inner face of the small-diameter hole portion, and the barb portion is deformable by contact with the small-diameter portion when the second component is fitted.

According to the present invention, a barb portion is deformable by contact with the small-diameter portion of the second component at the time of the fitting of the second component, and therefore, the second component can be smoothly inserted without great resistance at the time of the fitting of the second component. On the other hand, when an axially forward force (that is, a force in the direction in which the second component comes off) is applied to the second component after the fitting of the second component, the barb portion tends to recover a state before the fitting (deformation) of the second component, and accordingly, the barb portion bites into the outer surface of the small-diameter portion of the second component to securely lock the second component. That is, while the second component can be easily fitted, the second component does not come off after fitted.

According to the present invention, the inner step portion functions as a stopper capable of positioning for the fitting of the second component, so that the second component can be easily fitted in a desired position. In addition, even when the user applies excessive force to the second component, the second component does not retract into the first component.

Preferably, the barb portion is disposed at a rear end of the inner face of the small-diameter hole portion. Thus, the small-diameter hole portion functions as a guide for the insertion of the small-diameter portion, so that the small-diameter portion can be more easily inserted into the small-diameter hole and thereby the second component can be more easily fitted.

Preferably, the fitting hole further includes a large-diameter hole portion disposed in front of the inner step portion, and the large-diameter portion is fitted into or loosely engaged in the large-diameter hole portion. Thus, a portion closer to the front of the second component can be sandwiched, so that the second component becomes stable.

Preferably, the barb portion includes a plurality of barb portions disposed circumferentially at equal intervals in the small-diameter hole portion. Thus, the barb portion circumferentially bites into the outer surface of the second component at equal intervals, whereby the second component can be more securely locked.

Preferably, a transverse cross-section of a tip of the barb portion is R-shaped. Thus, the barb portion can be easily formed.

Preferably, the second component further includes: a locking groove behind the first outer step portion; and a second outer step portion at a rear end of the locking groove, the barb portion is locked to the second outer step portion, and the second component is axially locked to be prevented from coming off. Thus, when an axially forward force (that is, a force in the direction in which the second component comes off) is applied to the second component after the fitting of the second component, a force acts on the barb portion so that the barb portion tends to return to the state before tilted. At this time, the barb portion gets caught on a second outer step portion provided in the outer surface of the small-diameter portion, whereby the second component can be more securely prevented from coming off after the fitting of the second component.

Preferably, the first component is a writing instrument body, the second component is a pen tip, and the fitting hole is disposed in a front part of the writing instrument body. Thus, the pen tip and an ink absorber are connected to each other without failure, so that ink is smoothly supplied from the ink absorber to the pen tip. Furthermore, even when the user applies excessive pressure to the pen tip during the use of the writing instrument, the pen tip does not retract into the writing instrument.

Preferably, the first component is a shaft tube or a cap of the writing instrument, the second component is a soft member, and the fitting hole is disposed at a tail end of the shaft tube or a closed end of the cap. Thus, even when the user applies excessive force to the soft member during the use of the soft member, the soft member does not retract into the writing instrument.

### EFFECT OF THE INVENTION

According to the present invention, a component can be easily fitted, while the component does not come off after fitted.

### BRIEF DESCRIPTION OF DRAWINGS

FIG. 1 is a schematic longitudinal cross-sectional view of a writing instrument in a first embodiment according to the present invention;
FIG. 2 is an enlarged longitudinal cross-sectional view of a main part to illustrate a pen tip fitting process according to the present invention, in which a state before the pen tip fitting is illustrated;
FIG. 3 is an enlarged longitudinal cross-sectional view of the main part to illustrate the pen tip fitting process according to the present invention, in which a state during the pen tip fitting is illustrated;
FIG. 4 is an enlarged longitudinal cross-sectional view of the main part to illustrate the pen tip fitting process according to the present invention, in which a state after the pen tip fitting is illustrated;
FIG. 5 is a cross-sectional perspective view of a shaft tube in the first embodiment according to the present invention, in which the state before the pen tip fitting is illustrated;
FIG. 6 is a cross-sectional view taken along line A-A in the shaft tube in FIG. 2, in which a transverse cross-sectional shape of a barb portion of the shaft tube in the first embodiment according to the present invention is illustrated;
FIG. 7 is a cross-sectional view taken along line A-A in the shaft tube in FIG. 2, in which a transverse cross-sectional shape of a barb portion of a shaft tube in a second embodiment according to the present invention;
FIG. 8 is an enlarged longitudinal cross-sectional view of a main part, in which a state after pen tip fitting in a third embodiment is illustrated;
FIG. 9 is an enlarged longitudinal cross-sectional view of a main part, in which a state after pen tip fitting in a fourth embodiment is illustrated;
FIG. 10 is a schematic longitudinal cross-sectional view of a writing instrument in a fifth embodiment according to the present invention;
FIG. 11 is an enlarged longitudinal cross-sectional view of a main part to illustrate a soft member fitting process according to the present invention, in which a state before the fitting of a soft member is illustrated;
FIG. 12 is an enlarged longitudinal cross-sectional view of the main part to illustrate the soft member fitting process according to the present invention, in which a state during the fitting of the soft member is illustrated;
FIG. 13 is an enlarged longitudinal cross-sectional view of the main part to illustrate the soft member fitting process according to the present invention, in which a state after the fitting of the soft member is illustrated;
FIG. 14 is a cross-sectional perspective view of a shaft tube in the fifth embodiment according to the present invention, in which a state before the fitting of a soft member is illustrated;
FIG. 15 is a cross-sectional view taken along line B-B in a shaft tube in FIG. 11, in which a transverse cross-sectional shape of a barb portion of the shaft tube in the fifth embodiment according to the present invention is illustrated;
FIG. 16 is a cross-sectional view taken along line B-B in the shaft tube in FIG. 11, in which a transverse cross-sectional shape of a barb portion of the shaft tube in a sixth embodiment according to the present invention is illustrated;
FIG. 17 is an enlarged longitudinal cross-sectional view of a main part in a seventh embodiment according to the present invention, in which a state after the fitting of a soft member is illustrated;
FIG. 18 is an enlarged longitudinal cross-sectional view of a main part in an eighth embodiment according to the present invention, in which a state after the fitting of a soft member is illustrated;
FIG. 19 is a schematic longitudinal cross-sectional view of a part of a writing instrument in a ninth embodiment according to the present invention;
FIG. 20 is a schematic longitudinal cross-sectional view of a part of a writing instrument in a tenth embodiment according to the present invention; and
FIG. 21 is a schematic longitudinal cross-sectional view of a part of a writing instrument in an eleventh embodiment according to the present invention.

### DESCRIPTION OF EMBODIMENTS

Hereinafter, first to fourth embodiments according to the present invention will be described with reference to the drawings. Note that, in pen tip attachment structures in the first to fourth embodiments, the term "front" refers to a pen tip 12 side of a writing instrument, and the term "rear" refers to a side opposite to the pen tip 12 side. In a pen tip, the term "front" refers to a writing portion 121 side of the pen tip, and the term "rear" refers to a side opposite to the writing portion 121 side.

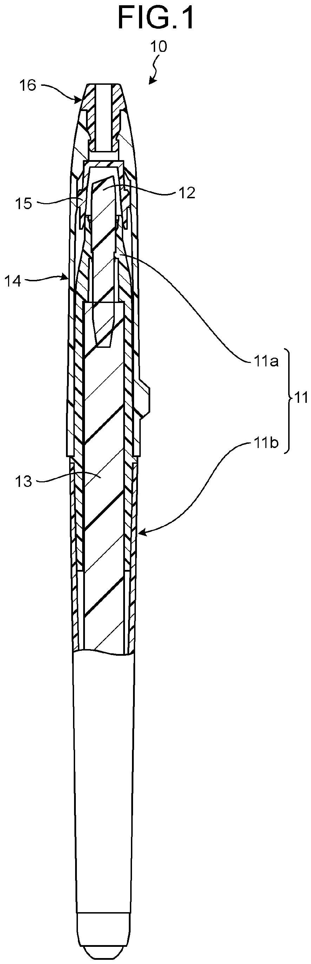

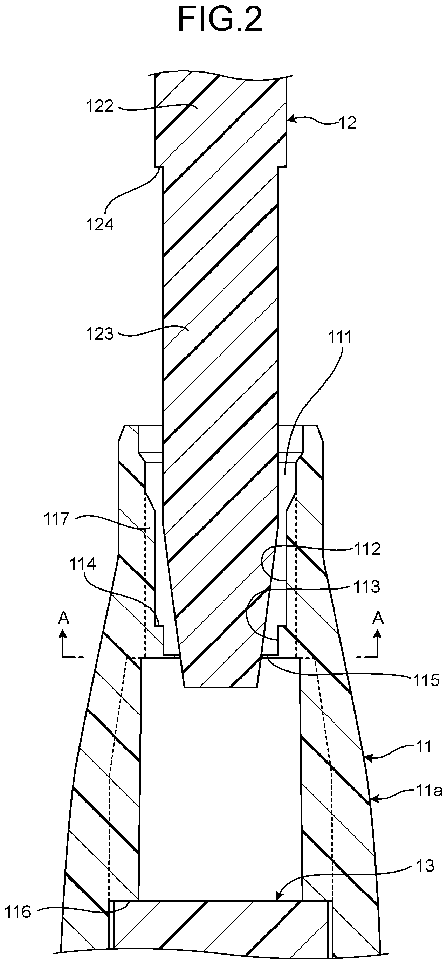

FIG. 1 is a schematic longitudinal cross-sectional view of a writing instrument 10 according to the present invention to illustrate a state in which a cap 14 is attached. FIGS. 2 to 4 are enlarged longitudinal cross-sectional views of a main part to illustrate a pen tip fitting process according to the present invention, in which states before, during, and after pen tip fitting are illustrated in order.

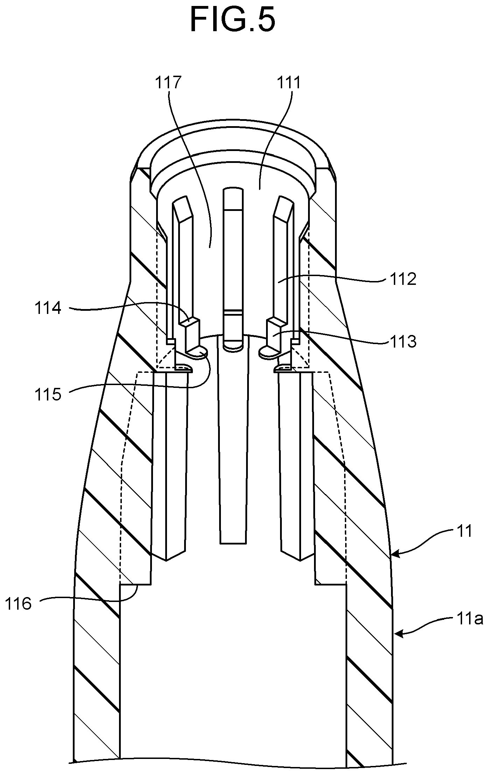

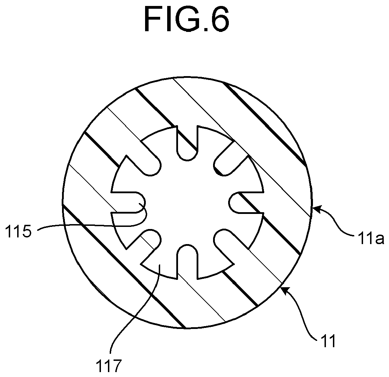

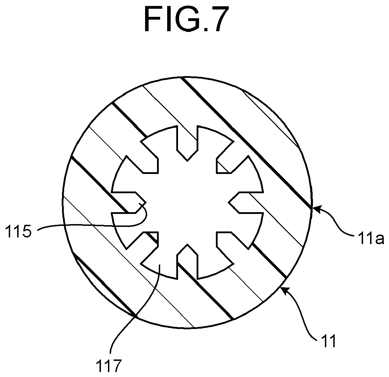

FIG. 5 is a cross-sectional perspective view of a shaft tube 11 in the first embodiment according to the present invention, in which the state before pen tip fitting is illustrated. FIGS. 6 and 7 are cross-sectional views taken along line A-A in the shaft tube 11 in FIG. 2, in each of which a transverse cross-sectional shape of a barb portion 115 of the shaft tube 11 in the first or second embodiment according to the present invention is illustrated.

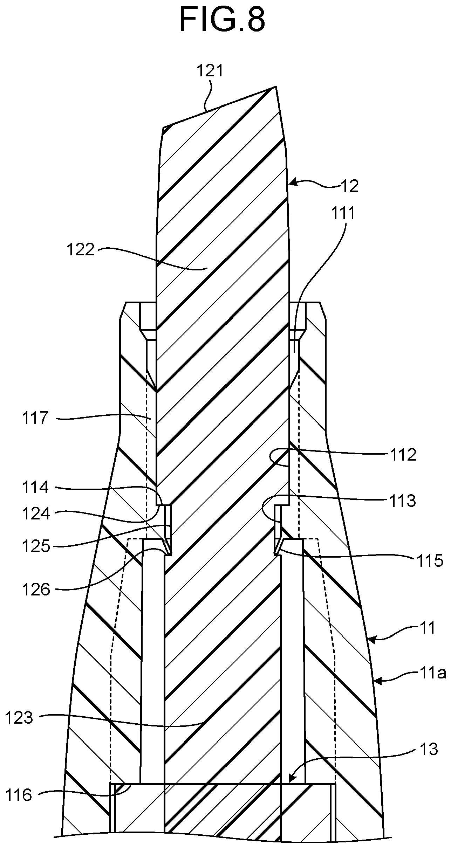

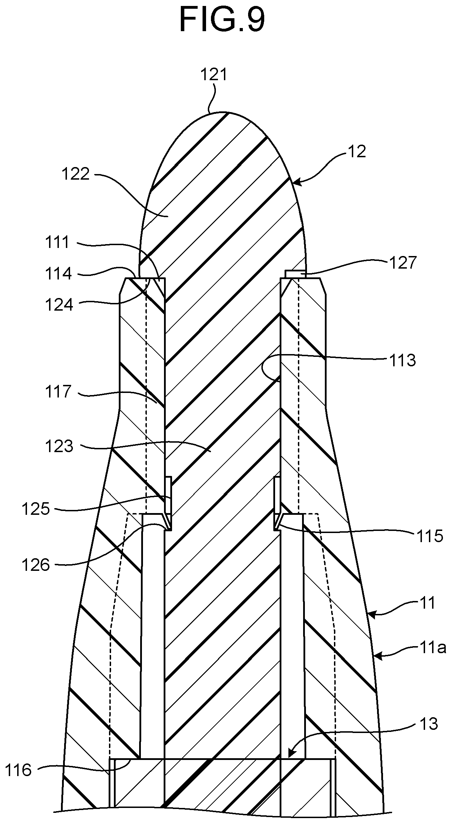

FIG. 8 is an enlarged longitudinal cross-sectional view of a main part, in which a state after pen tip fitting in a third embodiment is illustrated and the third embodiment is different from other embodiments in the shape of the outer face of the pen tip 12. FIG. 9 is an enlarged longitudinal cross-sectional view of a main part, in which a state after pen tip fitting in a fourth embodiment is illustrated, and the fourth embodiment is different from other embodiments in the shape of the outer face of the pen tip 12 and the shape of a portion located in front of a small-diameter hole portion 113 of the shaft tube 11.

### <First Embodiment>

The present invention provides a pen tip attachment structure in which a pen tip 12 (second component) is fitted into a pen tip fitting hole 111 (fitting hole) provided in the front part of a writing instrument 10 body (first component). The writing instrument 10 illustrated in FIG. 1 mainly includes a cap 14, the pen tip 12, an ink absorber 13, and a shaft tube 11. The pen tip 12 is fitted to a front end of the shaft tube 11, and the ink absorber 13 is accommodated in the shaft tube 11. The cap 14 may include an airtight member 15 configured to prevent ink evaporation from the pen tip 12. The pen tip 12 is fitted into the pen tip fitting hole 111 of the shaft tube 11 (front shaft 11a). A front shaft 11a and a rear shaft 11b may be detachably engaged with each other to replace the ink absorber 13 or replenish the ink absorber 13 with ink in a state in which the front shaft 11a is detached from the rear shaft 11b.

In the case where the writing instrument 10 is a thermochromic writing instrument containing thermochromic ink, the writing instrument 10 may further include a soft member 16. When the soft member 16 rubs against handwriting in thermochromic ink, the soft member 16 can thermally discolor the handwriting in thermochromic ink by frictional heat generated during the rubbing.

### <Shaft tube>

As illustrated in FIG. 1, the shaft tube 11 is a cylindrical body having a bottom and manufactured by injection or extrusion molding of a synthetic resin material, in which one end is open and the other end is closed. Examples of the synthetic resin material may include synthetic resins, such as polypropylene, polyethylene, polystyrene, polycarbonate, polyethylene terephthalate, polyacetal, acrylic, nylon, acrylonitrile-styrene copolymer resin (AS resin), and acrylonitrile-butadiene-styrene copolymer resin (ABS resin). The shaft tube 11 includes the front shaft 11a and the rear shaft 11b which are axially locked to each other to be prevented from coming off. The front shaft 11a includes the pen tip fitting hole 111, a flange portion, and an engagement portion. A large-diameter portion 122 of the pen tip 12 is fitted into the pen tip fitting hole 111. The flange portion can come into axial contact with an opening end of the rear shaft 11b. The engagement portion can be axially locked to an engagement-target portion in the inner face of the opening of the rear shaft 11b to be prevented from coming off, and a first annular seal portion configured to be airtightly fitted to a second annular seal portion in the inner circumferential face of the engagement-target portion of the rear shaft 11b is formed in the outer face of the engagement portion.

As illustrated in FIG. 2, the pen tip fitting hole 111 includes, in the inner face thereof: a large-diameter hole portion 112 disposed on the opening side: a small-diameter hole portion 113 disposed behind the large-diameter hole portion 112; and an inner step portion 114 perpendicular to an axis provided between the large-diameter hole portion 112 and the small-diameter hole portion 113. The large-diameter portion 122 of the pen tip 12 is fitted into or loosely fitted into the large-diameter hole portion 112. A small-diameter portion 123 of the pen tip 12 is fitted into or loosely fitted into the small-diameter hole portion 113.

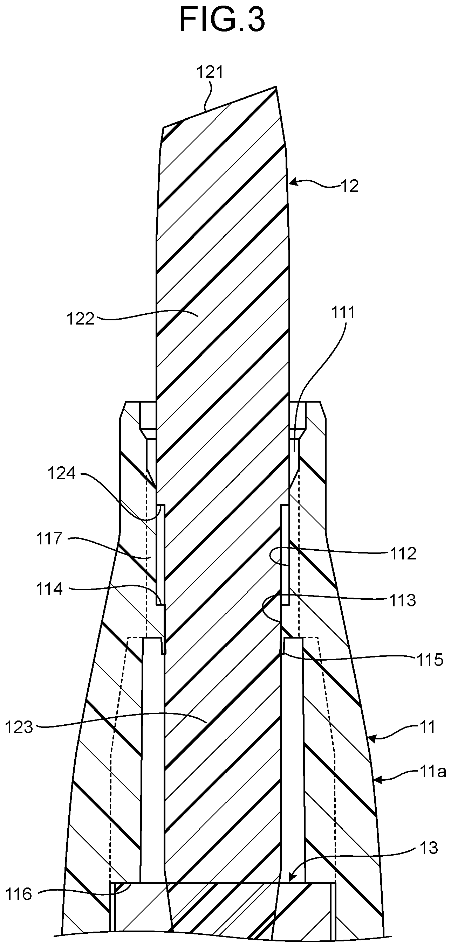

The small-diameter hole portion 113 includes a barb portion 115 protruding radially inward from the inner face of the small-diameter hole portion 113. As illustrated in FIG. 3, the barb portion 115 is deformable by contact with the small-diameter portion 123 at the time of pen tip fitting. That is, in the present embodiment, when the pen tip 12 is inserted, the barb portion 115 is tilted axially backward by the outer face of the small-diameter portion 123 of the pen tip 12. Thus, the small-diameter portion 123 can be easily inserted. That is, the pen tip 12 can be inserted smoothly without great resistance at the time of the fitting of the pen tip 12.

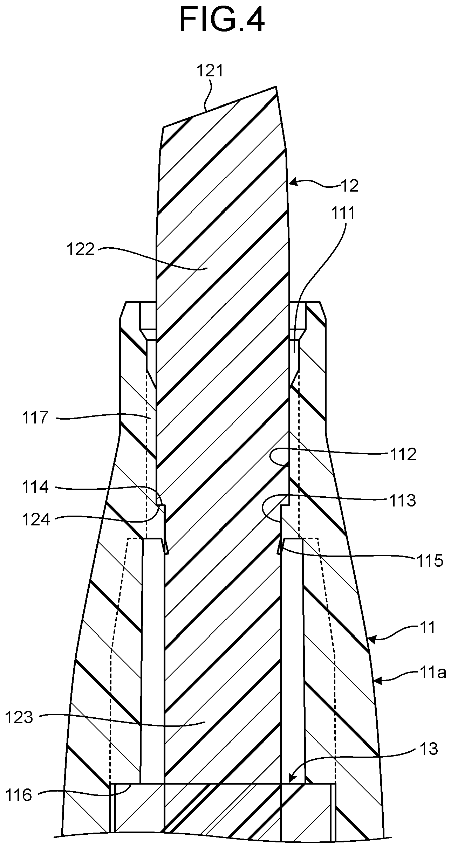

On the other hand, when an axially forward force (that is, a force in a direction in which the pen tip 12 comes off) is applied to the pen tip 12 after the fitting of the pen tip 12 (see FIG. 4), a force acts on the barb portion 115 so that the barb portion tends to return to the state before tilted. In other words, the barb portion 115 tends to recover the state before the fitting of the pen tip 12 (before the deformation of the barb portion 115: see FIG. 2). As a result, the barb portion 115 bites into the outer face of the small-diameter portion 123 of the pen tip 12 to securely lock the pen tip 12. That is, the pen tip 12 can be easily fitted, while the pen tip 12 does not come off after fitted.

As illustrated in FIG. 2, in the present embodiment, the barb portion 115 is provided at the rear end of the inner face of the small-diameter hole portion 113. Thus, the small-diameter hole portion 113 functions as a guide for the insertion of the small-diameter portion 123, so that the small-diameter portion 123 can be more easily inserted into the small-diameter hole portion 113, hence the pen tip 12 can be more easily fitted.

As illustrated in FIG. 5 or FIG. 6, in the present embodiment, a plurality of the barb portions 115 is circumferentially disposed at equal intervals in the small-diameter hole portion 113, and the transverse cross-section of the radially inward tip of the barb portion 115 is R-shaped. The barb portions 115 may be disposed at unequal intervals. At least one barb portion 115 is beneficially formed and bites into the outer face of the small-diameter portion 123. In the state before pen tip fitting illustrated in FIG. 2, the barb portion 115 in the present embodiment has an axial thickness t of 0.1 mm, a length L protruding axially inward from the small-diameter hole portion of 0.5 mm, and a circumferential width W of 0.6 mm. Preferably, 0.01 mm < t < 1.0 mm, 0.1 mm < W < 3.0 mm, and 0.1 mm < L < 2.0 mm are satisfied. By setting the dimensions of the barb portion to the above-mentioned ranges, the pen tip 12 can be more easily fitted, while the pen tip 12 does not come off after fitted.

A plurality of (specifically, eight) air flow grooves 117 extending in the axial direction is disposed at equal intervals in the inner face of the large-diameter hole portion 112 and the inner face of the small-diameter hole portion 113. The air flow grooves 117 form an air flow channel axially extending between the outer face of the pen tip 12 and the inner face of the shaft tube 11. Thus, air can smoothly flow, whereby ink is supplied from the ink absorber 13 to the pen tip 12.

As illustrated in FIG. 4, when the pen tip 12 is fitted, a later-mentioned first outer step portion 124 of the pen tip 12 comes into contact with the inner step portion 114. Thus, the inner step portion 114 functions as a stopper capable of positioning for the fitting of the pen tip 12, so that the pen tip 12 can be easily fitted in a desired position. In addition, the pen tip 12 and the ink absorber 13 are connected to each other without failure, so that ink is smoothly supplied from the ink absorber 13 to the pen tip 12. Furthermore, even when the user applies excessive pressure to the pen tip 12 during the use of the writing instrument, the pen tip 12 does not retract into the writing instrument.

As the writing instrument 10, not only the type in which the ink absorber 13 configured to hold ink is accommodated in the shaft tube 11, but also a type in which ink directly accommodated in the shaft tube 11 is guided to the pen tip 12 via the ink absorber 13 can be used. Furthermore, as necessary, an ink storage member (for example, a comb-groove-shaped ink storage member) configured to temporarily store excess ink in response to changes in the internal pressure of an ink tank and a guiding member configured to guide ink from the ink absorber 13 holding ink to the pen tip 12 can be provided. Furthermore, the writing instrument 10 may be any of a cap type and a pen tip protruding and retracting type (knock type).

### <Pen Tip>

The pen tip 12 includes, in the outer face thereof: the large-diameter portion 122; the small-diameter portion 123 disposed behind the large-diameter portion 122; and the first outer step portion 124 disposed between the large-diameter portion 122 and the small-diameter portion 123. The large-diameter portion 122 has a cylindrical shape and includes a writing portion 121 at a tip thereof. The small-diameter portion 123 has a cylindrical shape and is configured to be connected to the ink absorber 13. When the pen tip 12 is fitted, the first outer step portion 124 comes into contact with the inner step portion 114 of the pen tip fitting hole 111.

As the writing portion 121, one end of the pen tip 12 protrudes forward from the front opening of the shaft tube 11. The other end (the small-diameter portion 123) of the pen tip 12 is connected to the front end of the ink absorber 13 in a sticking manner. For example, as illustrated in FIG. 3, the writing portion 121 is shaped into a chisel form. The shape of the writing portion 121 is not limited to the chisel form, but may be shaped into other forms in accordance with the purpose, such as a bullet form, a rectangular form, a square prism form, and a plate form. The form of the writing instrument 10 according to the present invention is not limited to the example illustrated in the figure, but may be a double-headed writing instrument in which pen tips 12 having different forms may be respectively attached to both ends of the ink absorber 13.

The pen tip 12 is formed of a resin processed body of fiber (for example, a resin processed body of polyester fiber). One end of the pen tip 12 protrudes to the outside as the writing portion 121, meanwhile the other end thereof is connected to one end of the ink absorber 13 in a sticking manner. The pen tip 12 beneficially allows ink to flow therethrough, and specific examples of the pen tip 12 include pen tips that utilize capillary attraction, such as a fiber pen tip formed of a fusion bonding processed body of thermofusible fiber, a felt pen tip formed of a felt body, a plastic pen tip in which a plurality of filament resins (monofilament formed by extrusion molding of synthetic resin) is fusion-bonded to form an ink flow channel axially extending inside the pen tip, a pen tip (porous tip) formed of a porous body made of synthetic resin and having continuous bubbles, and a brush pen tip. Furthermore, the pen tip 12 may be a tip in which a ball is held by a ball holding portion formed by inwardly pressing and deforming a part near a tip of a metal pipe from the outer face, a tip in which a ball is held in a ball holding portion formed by cutting a metal material with a drill or the like, or a tip in which a resin ball holder is provided inside a metal or plastic tip. Note that, as the above-mentioned balls, there can be used a ball made of, for example, cemented carbide, stainless steel, ruby, ceramic, resin, or rubber, and having a diameter of 0.3 to 3.0 mm, preferably 0.3 to 1.5 mm, and more preferably 0.4 to 1.0 mm.

### <Ink Absorber>

The ink absorber 13 is beneficially capable of being impregnated with ink. Specific examples of the ink absorber 13 include fiber bundle processed bodies (for example, a fusion-bonding processed body of a fiber bundle, a resin processed body of a fiber bundle, a resin processed body of felt, and a needle-punching processed body of felt) and porous bodies (for example, a continuous bubble body made of synthetic resin, such as a sponge). The outer circumferential face of the ink absorber 13 may be coated with a synthetic resin film.

As illustrated in FIG. 1 or FIG. 2, the front end face of the ink absorber 13 axially comes into contact with a contact wall 116 provided in the front shaft 11a. The rear end face of the ink absorber 13 axially comes into contact with a second contact wall (not illustrated) provided in the rear shaft 11b. The longitudinal dimension of the ink absorber 13 is preferably larger than a longitudinal dimension between the contact wall 116 and the second contact wall. Thus, the ink absorber 13 in the shaft tube 11 is axially sandwiched between the contact wall 116 and the second contact wall to provide stable writing performance.

### <Soft Member>

As illustrated in FIG. 1, in the present embodiment, the soft member 16 is axially engaged with the top of the cap 14 to be prevented from coming off. The attachment structure and attachment position of the soft member 16 are not limited to the aspect of the present embodiment. For example, there may be applied an aspect in which a soft member 16 made of an elastic material is press-fitted into, engaged with, screwed onto, fitted into, glued onto, or two-color molded onto the outer face of the rear end of the shaft tube 11, or an aspect in which the entirety of the shaft tube 11 or the cap 14 is integrally molded using an elastic material.

An elastic synthetic resin constituting the soft member 16 is not a highly abrasive elastic material (for example, an eraser), but preferably a low abrasive elastic material that hardly produces abrasion crumbs (eraser crumbs) by friction.

The elastic material constituting the soft member 16 is preferably an elastic synthetic resin (rubber, elastomer). Examples of the elastic synthetic resin include silicone resin, SBS resin (styrene-butadienestyrene copolymer), SEBS resin (styrene-ethylene-butylene-styrene copolymer), fluoro-resin, chloroprene resin, nitrile resin, polyester resin, ethylene propylene diene monomer rubber (EPDM), a mixture of two or more elastic rubber materials, and a mixture of an elastic rubber material and synthetic resin.

### <Ink>

In the present embodiment, the ink accommodated in the ink absorber 13 is a thermochromic ink. The thermochromic ink is preferably a reversible thermochromic ink. Various types of reversible thermochromic inks, such as a heat-decolorizing type that decolorizes by heating from a color-developed state; a color memory holding type that holds a color-developed state or a decolored state interchangeably within a specific temperature range; or a heat color-developing type that develops color by heating from a decolored state and returns from a color-developed state to the decolored state by cooling, can be used alone or in combination.

Preferred examples of a coloring agent contained in the reversible thermochromic ink include a reversible thermochromic pigment in which a reversible thermochromic composite containing at least three indispensable components, namely, (I) an electron-donating color-reactive organic compound, (II) an electron-accepting compound, and (III) a reactive medium that determines a temperature for causing a chemical bond reaction (color reaction) between the above-mentioned two compounds, is contained in a microcapsule.

Note that the ink used in the present invention is not limited to the thermochromic ink, and an ink composite other than the thermochromic ink can be used. For example, an ink for writing, a correction fluid, a liquid glue, or a cosmetic fluid is beneficially chosen in accordance with the application of a liquid-dispensing tool. The ink for writing is not limited to a particular ink, and may be an oil-based ink or a water-based ink, for example.

### <Second Embodiment>

FIG. 7 is a cross-sectional view taken along line A-A in the shaft tube 11 in FIG. 2, in which a cross-sectional shape of a barb portion 115 of the shaft tube 11 in a second embodiment according to the present invention. The second embodiment according to the present invention is different from the first embodiment in the transverse cross-sectional shape of the barb portion 115. Specifically, a radially inward tip of the barb portion 115 has a sharply pointed transverse cross-section.

Other constituents in the second embodiment are approximately the same as those in the first embodiment, and therefore detailed descriptions thereof will be omitted. As illustrated in FIG. 7, according to the present embodiment, the barb portions 115 bite into the outer face of the pen tip 12 circumferentially at equal intervals to more securely lock the pen tip 12. Furthermore, since the radially inward tip of the barb portion 115 has a sharply pointed transverse cross-section, the barb portion 115 more deeply bites into the outer face of the pen tip 12, whereby the pen tip 12 is more firmly axially locked to be prevented from coming off.

The transverse cross-sectional shape of the tip of the barb portion 115 is not limited to a sharply pointed shape or the above-mentioned R shape, but may be other shapes suitable for the pen tip, such as a rectangular shape and an inverted R shape with a radially inward tip being recessed. The barb portion 115 may be a burr formed by resin entering a gap between mating faces of a mold (pin) when the shaft tube 11 is produced by injection molding.

### <Third Embodiment>

FIG. 8 is an enlarged longitudinal cross-sectional view of a main part, in which a state after the fitting of the pen tip 12 in a third embodiment according to the present invention is illustrated. The third embodiment according to the present invention is different from the first embodiment in the shape of a portion located behind the first outer step portion 124 of the pen tip 12. Specifically, as illustrated in FIG. 8, the pen tip 12 includes: a locking groove 125 disposed behind the first outer step portion 124; and a second outer step portion 126 disposed at the rear end of the locking groove 125, in which the barb portion 115 is locked to the second outer step portion 126 and thereby the pen tip 12 is axially locked to be prevented from coming off. The locking groove 125 is preferably circumferentially formed on the small-diameter portion 123.

Other constituents in the third embodiment are approximately the same as those in the first embodiment, and therefore detailed descriptions thereof will be omitted. According to the present embodiment, as in the case of the first embodiment, when an axially forward force (that is, a force in a direction in which the pen tip 12 comes off) is applied to the pen tip 12 after the fitting of the pen tip 12, a force acts on the barb portion 115 so that the barb portion 115 tends to return to the state before tilted. At this time, as illustrated in FIG. 8, the barb portion 115 gets caught on the second outer step portion 126 provided in the outer face of the small-diameter portion 123, whereby the pen tip 12 can be more securely prevented from coming off after the fitting of the pen tip 12. Since the locking groove 125 is circumferentially formed on the small-diameter portion 123, positioning the pen tip 12 in the rotational direction becomes unnecessary when the pen tip 12 is inserted into the shaft tube 11, and thus the pen tip 12 can be easily fitted.

### <Fourth Embodiment>

FIG. 9 is an enlarged longitudinal cross-sectional view of a main part, in which a state after the fitting of the pen tip 12 in a fourth embodiment is illustrated. The fourth embodiment according to the present invention is different from the third embodiment in the shape of a portion located in front of the small-diameter hole portion 113 of the shaft tube 11. Specifically, as illustrated in FIG. 9, the large-diameter hole portion of the shaft tube 11 is omitted and the inner step portion 114 is disposed at the front end of the shaft tube.

The fourth embodiment according to the present invention is different from the third embodiment in the shape of the outer face of the pen tip 12. Specifically, as illustrated in FIG. 9, the pen tip 12 includes: the locking groove 125 disposed in the surface of the small-diameter portion and behind the outer step portion; the second outer step portion 126 at the rear end of the locking groove 125, and the writing portion 121 has a bullet shape. Furthermore, when the first outer step portion 124 of the pen tip 12 comes into contact with the inner step portion 114, an air flow hole 127 is formed between the first outer step portion 124 and the inner step portion. Thus, air can smoothly flow, whereby ink is supplied from the ink absorber 13 to the pen tip 12.

Other constituents in the fourth embodiment are approximately the same as those in the third embodiment, and therefore detailed descriptions thereof will be omitted. According to the present embodiment, even a front portion closer to the writing portion 121 of the pen tip 12 can be sandwiched, so that writing can be stably performed.

The pen tip attachment structure configured as described above works as follows.

The pen tip attachment structure according to the present invention is configured such that the pen tip 12 is fitted into the pen tip fitting hole 111 provided in the front part of the writing instrument 10 body, the pen tip 12 including: the small-diameter portion 123; the large-diameter portion 122 disposed in front of the small-diameter portion 123; and the first outer step portion 124 disposed between the small-diameter portion 123 and the large-diameter portion 122, the pen tip fitting hole 111 including: the small-diameter hole portion 113; and the inner step portion 114 disposed in front of the small-diameter hole portion 113, the small-diameter portion 123 being fitted into or loosely fitted into the small-diameter hole portion 113, the first outer step portion 124 coming into contact with the inner step portion 114, the small-diameter hole portion 113 including the barb portion 115 protruding from the inner face of the small-diameter hole portion 113, the barb portion 115 being deformable by contact with the small-diameter portion 123 at the time of pen tip fitting.

According to the present invention, the barb portion 115 is deformable by contact with the small-diameter portion 123 of the pen tip 12 at the time of pen tip fitting, and therefore the pen tip 12 can be smoothly inserted without great resistance in the fitting of the pen tip 12. On the other hand, when an axially forward force (that is, a force in a direction in which the pen tip 12 comes off) is applied to the pen tip 12 after the pen tip fitting, the barb portion 115 tends to recover the state before the pen tip fitting (before pen tip deformation), and accordingly, the barb portion 115 bites into the outer face of the small-diameter portion of the pen tip 12 to securely lock the pen tip 12. That is, the pen tip 12 can be easily fitted, while the pen tip 12 does not come off after fitted.

According to the present invention, the inner step portion 114 functions as a stopper capable of positioning for the pen tip fitting, so that the pen tip 12 can be easily fitted in a desired position. In addition, the pen tip 12 and the ink absorber 13 are connected to each other without failure, so that ink is smoothly supplied from the ink absorber 13 to the pen tip 12. In addition, even when the user applies excessive pressure to the pen tip 12 during the use of the writing instrument 10, the pen tip 12 does not retract into the writing instrument 10.

The barb portion 115 is preferably disposed at the rear end of the inner face of the small-diameter hole portion 113. Thus, the small-diameter hole portion 113 functions as a guide for the insertion of the small-diameter portion 123, so that the small-diameter portion 123 can be more easily inserted into the small-diameter hole portion 113, hence the pen tip 12 can be more easily fitted.

The pen tip fitting hole 111 preferably further includes the large-diameter hole portion 112 disposed in front of the inner step portion 114, whereby the large-diameter portion 122 is fitted into or loosely engaged in the large-diameter hole portion 112. Thus, a portion closer to the front of the pen tip 12 can be sandwiched, so that writing can be stably performed.

A plurality of the barb portions 115 is preferably disposed circumferentially at equal intervals in the small-diameter hole portion 113, in which the transverse cross-section of a tip of each of the barb portions 115 is R-shaped. Thus, the barb portions 115 bite into the outer face of the pen tip 12 circumferentially at equal intervals to more securely lock the pen tip 12.
Since the transverse cross-section of the tip of the barb portion 115 is R-shaped, the barb portion 115 can be easily formed.

The pen tip 12 preferably includes: the locking groove 125 disposed behind the first outer step portion 124; and the second outer step portion 126 disposed at the rear end of the locking groove 125, in which the barb portion 115 is locked to the second outer step portion 126 so that the pen tip 12 is axially locked to be prevented from coming off. Thus, when an axially forward force (that is, a force in a direction in which the pen tip 12 comes off) is applied to the pen tip 12 after the pen tip fitting, a force acts on the barb portion 115 so that the barb portion 115 tends to return to the state before tilted. At this time, the barb portion 115 gets caught on the second outer step portion 126 provided in the outer face of the small-diameter portion, whereby the pen tip 12 can be more securely prevented from coming off after the pen tip fitting.

Furthermore, a target of the present invention is only the shaft tube 11 of the writing instrument 10 described above. That is, the shaft tube 11 of the writing instrument 10 includes, at the front end thereof, the pen tip fitting hole 111 into which the pen tip 12 is to be fitted. The outer face of the pen tip 12 includes: the large-diameter portion 122; the small-diameter portion 123 disposed behind the large-diameter portion 122; and the first outer step portion 124 disposed between the large-diameter portion 122 and the small-diameter portion 123. The inner face of the pen tip fitting hole 111 includes: the large-diameter hole portion 112; the small-diameter hole portion 113 disposed behind the large-diameter hole portion 112; and the inner step portion 114 disposed between the large-diameter hole portion 112 and the small-diameter hole portion 113. The large-diameter portion 122 is fitted into the large-diameter hole portion 112. The small-diameter portion 123 is fitted into or loosely fitted into the small-diameter hole portion 113. The first outer step portion 124 comes into contact with the inner step portion 114. The small-diameter hole portion 113 includes the barb portion 115 protruding from the inner face of the small-diameter hole portion 113. The barb portion 115 is deformable by contact with the small-diameter portion 123 at the time of the fitting of the pen tip 12. Thus, the pen tip 12 can be easily fitted, while the pen tip 12 does not come off after the fitting of the pen tip 12 and the pen tip 12 does not retract into the writing instrument 10 during writing.

Hereinafter, fifth to eighth embodiments according to the present invention will be described with reference to the drawings. Note that, in soft member attachment structures of the fifth to eighth embodiments, the term "front" refers to a soft member 22 side in a writing instrument, and the term "rear" refers to a side opposite to the soft member 22 side. In the soft member, the term "front" refers to a friction portion 221 side and the term "rear" refers to a side opposite to the friction portion 221 side.

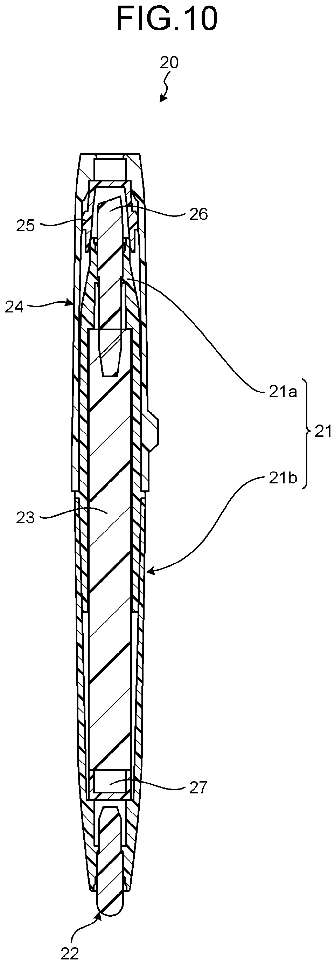

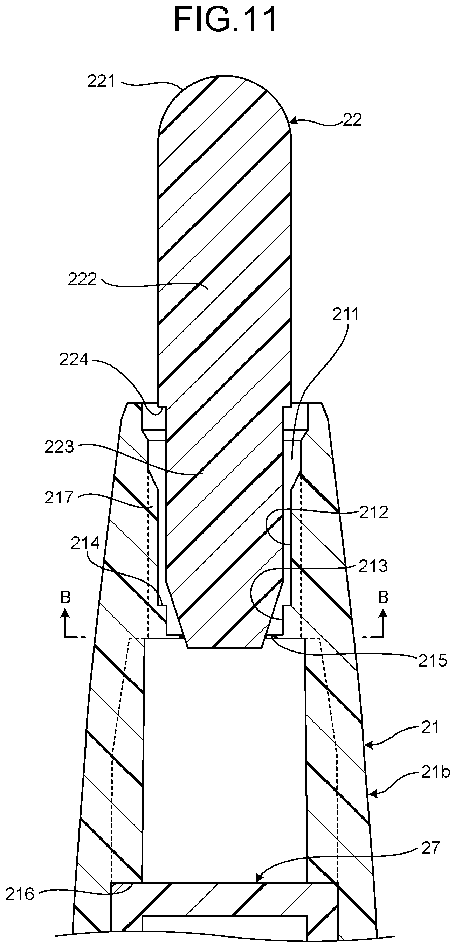

FIG. 10 is a schematic longitudinal cross-sectional view of a writing instrument 20 in the present invention to illustrate a state in which a cap 24 is attached. FIGS. 11 to 13 are enlarged longitudinal cross-sectional views of a main part to illustrate the process of fitting the soft member 22 according to the present invention, in which states before, during, and after soft member fitting are illustrated in order.

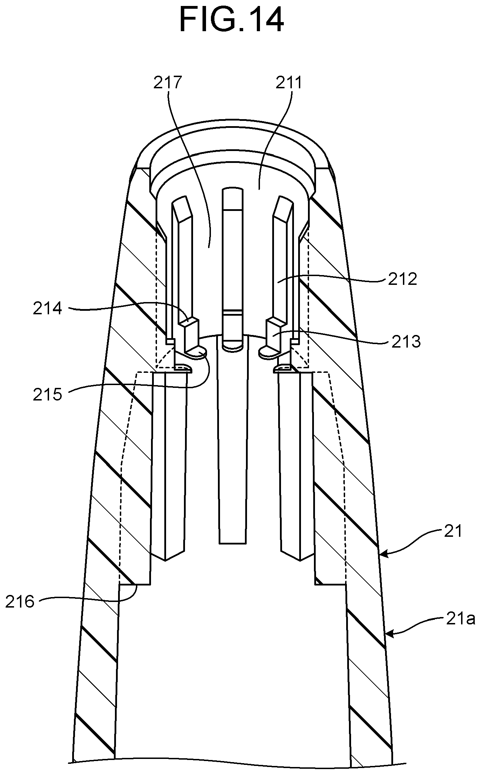

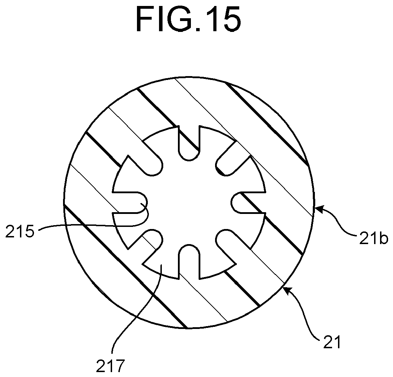

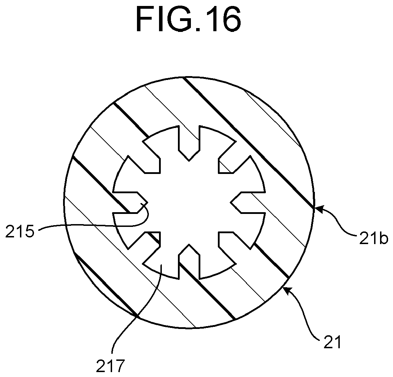

FIG. 14 is a cross-sectional perspective view of a shaft tube 21 in the fifth embodiment according to the present invention, in which the state before the soft member fitting is illustrated. FIG. 15 and FIG. 16 are cross-sectional views taken along line B-B in the shaft tube 21 in FIG. 11, in each of which a transverse cross-sectional shape of a barb portion 215 of the shaft tube 21 in the fifth or the sixth embodiment according to the present invention is illustrated.

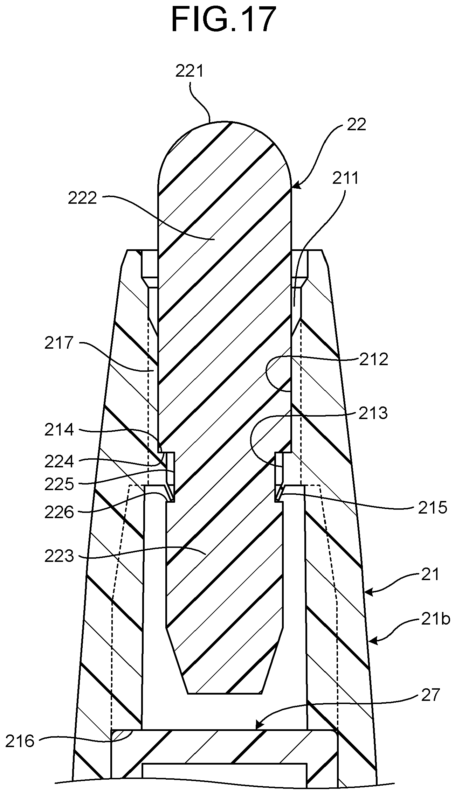

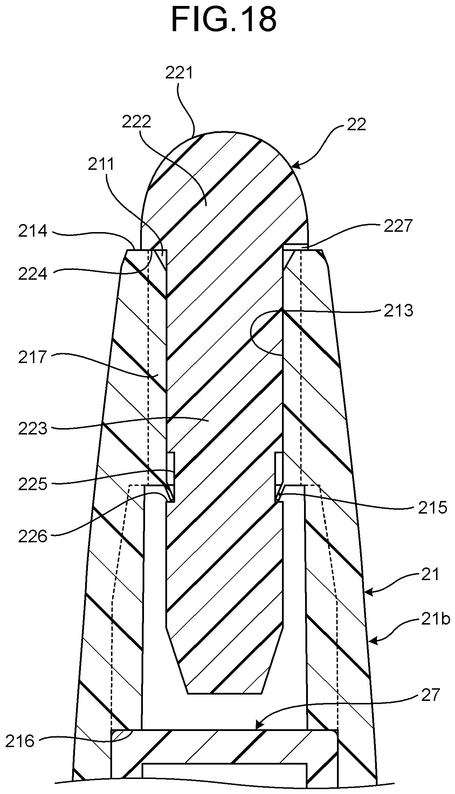

FIG. 17 is an enlarged longitudinal cross-sectional view of a main part of the seventh embodiment according to the present invention to illustrate the state after the soft member fitting. The seventh embodiment is different from other embodiments in the shape of the outer face of the soft member 22. FIG. 18 is an enlarged longitudinal cross-sectional view of a main part in the eighth embodiment according to the present invention to illustrate the state after the soft member fitting. The eighth embodiment is different from other embodiments in the shape of the outer face of the soft member 22 and the shape of a portion located in front of a small-diameter hole portion 213 of the shaft tube 21.

### <Fifth Embodiment>

The present invention provides a soft member attachment structure in which the soft member 22 (second component) is fitted to a tail end of the shaft tube 21 (first component) or a closed end of a cap (first component) of the writing instrument 20. The writing instrument 20 illustrated in FIG. 10 mainly includes the cap 24, a pen tip 26, an ink absorber 23, the shaft tube 21 (a first shaft 21a, a second shaft 21b), and the soft member 22. The pen tip 26 is fitted to a front end of the shaft tube 21, and the ink absorber 23 is accommodated in the shaft tube 21. The cap 24 may include an airtight member 25 configured to prevent ink evaporation from the pen tip 26. The pen tip 26 is fitted into the pen tip fitting hole of the shaft tube 21 (first shaft 21a). The first shaft 21a and the second shaft 21b may be detachably engaged with each other to replace the ink absorber 23 or replenish the ink absorber 23 with ink in a state in which the first shaft 21a is detached from the second shaft 21b.

The writing instrument 20 is a thermochromic writing instrument containing thermochromic ink. When the soft member 22 rubs against handwriting in thermochromic ink, the soft member 22 can thermally discolor the handwriting in thermochromic ink by frictional heat generated by the rubbing.

### <Shaft tube>

As illustrated in FIG. 10, the shaft tube 21 is a cylindrical body having a bottom, the shaft tube 21 being manufactured by injection or extrusion molding of a synthetic resin material and including one open end and one closed end. Examples of the synthetic resin material may include synthetic resins, such as polypropylene, polyethylene, polystyrene, polycarbonate, polyethylene terephthalate, polyacetal, acrylic, nylon, acrylonitrile-styrene copolymer resin (AS resin), and acrylonitrile-butadiene-styrene copolymer resin (ABS resin). The shaft tube 21 includes the first shaft 21a and the second shaft 21b, which are axially locked to each other to be prevented from coming off. The first shaft 21a includes a pen tip fitting hole, a flange portion, and an engagement portion. The second shaft 21b includes a soft member fitting hole 211 and an engagement-target portion. The inner side of the soft member fitting hole 211 of the second shaft 21b is closed by an inner plug 27. A large-diameter portion 222 of the soft member 22 is fitted into the soft member fitting hole 211. The flange portion can come into axial contact with an open end of the second shaft 21b. The engagement portion can be axially locked to the engagement-target portion in the inner face of the opening of the second shaft 21b to be prevented from coming off, and in the outer face of the engagement portion, there is formed a first annular seal portion configured to be airtightly fitted into a second annular seal portion in the inner circumferential face of the engagement-target portion of the second shaft 21b.

As illustrated in FIG. 11, the soft member fitting hole 211 includes, in the inner face thereof: a large-diameter hole portion 212 disposed on the opening side; a small-diameter hole portion 213 disposed behind the large-diameter hole portion 212; and an inner step portion 214 perpendicular to the axis and disposed between the large-diameter hole portion 212 and the small-diameter hole portion 213. The large-diameter portion 222 of the soft member 22 is fitted into or loosely fitted into the large-diameter hole portion 212. A small-diameter portion 223 of the soft member 22 is fitted into or loosely fitted into the small-diameter hole portion 213.

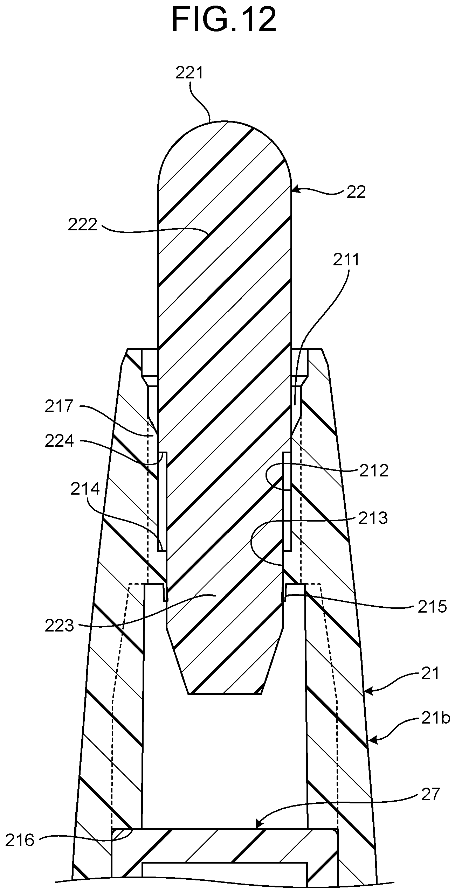

The small-diameter hole portion 213 includes a barb portion 215 protruding radially inward from the inner face of the small-diameter hole portion 213. As illustrated in FIG. 12, the barb portion 215 is deformable by contact with the small-diameter portion 223 at the time of soft member fitting. That is, in the present embodiment, when the soft member 22 is inserted, the barb portion 215 is tilted axially backward by the outer face of the small-diameter portion 223 of the soft member 22.
Thus, the small-diameter portion 223 can be easily inserted. That is, the soft member 22 can be inserted smoothly without great resistance during the fitting of the soft member 22.

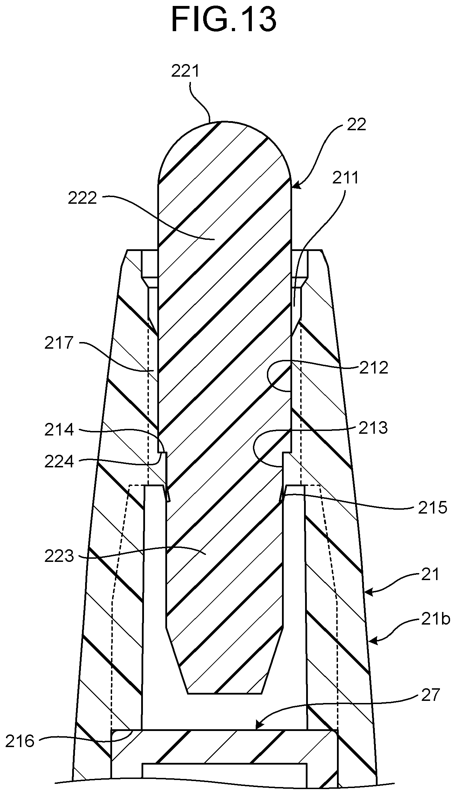

On the other hand, when an axially forward force (that is, a force in a direction in which the soft member 22 comes off) is applied to the soft member 22 after the fitting of the soft member 22 (see FIG. 13), a force acts on the barb portion 215 so that the barb portion 215 tends to return to the state before tilted. In other words, the barb portion 215 tends to recover the state before the fitting of the soft member 22 (before the deformation of the barb portion 215: see FIG. 11). Thus, the barb portion 215 bites into the outer face of the small-diameter portion 223 of the soft member 22 to securely lock the soft member 22. That is, the soft member 22 can be easily fitted, while the soft member 22 does not come off after fitted.

As illustrated in FIG. 11, in the present embodiment, the barb portion 215 is disposed at the rear end of the inner face of the small-diameter hole portion 213. Thus, the small-diameter hole portion 213 functions as a guide for the insertion of the small-diameter portion 223, so that the small-diameter portion 223 can be more easily inserted into the small-diameter hole portion 213, hence the soft member 22 can be more easily fitted.

As illustrated in FIG. 14 or FIG. 15, in the present embodiment, a plurality of the barb portions 215 is disposed circumferentially at equal intervals in the small-diameter hole portion 213, and the transverse cross-section of the radially inward tip of each of the barb portions 215 is R-shaped. The barb portions 215 may be disposed at unequal intervals. At least one barb portion 215 is beneficially formed and bites into the outer face of the small-diameter portion 223. In the state before the soft member fitting illustrated in FIG. 11, the barb portion 215 in the present embodiment has an axial thickness t of 0.1 mm, a length L axially protruding inward from the small-diameter hole portion 213 of 0.5 mm, and a circumferential width W of 0.6 mm. Preferably, 0.01 mm < t < 1.0 mm, 0.1 mm < W < 3.0 mm, and 0.1 mm < L < 2.0 mm are satisfied. By setting the dimensions of the barb portion 215 to the above-mentioned ranges, the soft member 22 can be more easily fitted, while the soft member 22 does not come off after fitted.

A plurality of (specifically, eight) air flow grooves 217 extending in the axial direction are disposed at equal intervals in the inner face of the large-diameter hole portion 212 and the inner face of the small-diameter hole portion 213. The air flow grooves 217 form an axial air flow channel between the outer face of the soft member 22 and the inner face of the shaft tube 21. Thus, air can flow smoothly, and hence, without air being compressed in the shaft tube during the fitting of the soft member 22, the soft member 22 can be fitted smoothly.

As illustrated in FIG. 13, when the soft member 22 is fitted, the later-mentioned first outer step portion 224 of the soft member 22 comes into contact with the inner step portion 214. Thus, the inner step portion 214 functions as a stopper capable of positioning for the fitting of the soft member 22, so that the soft member 22 can be easily fitted in a desired position. Furthermore, even when the user applies excessive force to the soft member 22 during the use of the soft member, the soft member 22 does not retract into the writing instrument 20.

As the writing instrument 20, not only the type in which the ink absorber 23 configured to hold ink is accommodated in the shaft tube 21, but also a type in which ink directly accommodated in the shaft tube 21 is guided to the pen tip 26 via the ink absorber 23 can be used. Furthermore, as necessary, an ink storage member (for example, a comb-groove-shaped ink storage member) configured to temporarily store excess ink in response to changes in the internal pressure of an ink tank and a guiding member configured to guide ink from the ink absorber 23 holding ink to the pen tip 26 can be provided. Furthermore, the writing instrument 20 may be any of a cap type and a pen tip protruding and retracting type (knock type).

### <Soft Member>

The soft member 22 includes, in the outer face thereof: the large-diameter portion 222; the small-diameter portion 223 disposed behind the large-diameter portion 222; and the first outer step portion 224 disposed between the large-diameter portion 222 and the small-diameter portion 223. The large-diameter portion 222 has a cylindrical shape and includes the friction portion 221 at a tip thereof. The small-diameter portion 223 has a cylindrical shape. When the soft member 22 is fitted, the first outer step portion 224 comes into contact with the inner step portion 214 of the soft member fitting hole 211.

As the friction portion 221, one end of the soft member 22 protrudes forward from the front opening of the shaft tube 21. For example, as illustrated in FIG. 12, the friction portion 221 is shaped into a bullet form. The friction portion 221 is not limited to the bullet form, but may be shaped into other forms in accordance with the purpose, such as a chisel form, a rectangular form, a square prism form, and a plate form. The form of the writing instrument 20 according to the present invention is not limited to examples illustrated in the figures, and the writing instrument 20 may be a writing instrument including a friction body fitted to the top (on the closed end side) of a cap.

An elastic synthetic resin constituting the soft member 22 is not a highly abrasive elastic material (for example, an eraser), but preferably a low-abrasive elastic material that hardly produces abrasion crumbs (eraser crumbs) by friction.

The elastic material constituting the soft member 22 is preferably an elastic synthetic resin (rubber, elastomer). Examples of the elastic synthetic resin include silicone resin, SBS resin (styrene-butadienestyrene copolymer), SEBS resin (styrene-ethylene-butylene-styrene copolymer), fluoro-resin, chloroprene resin, nitrile resin, polyester resin, ethylene propylene diene monomer rubber (EPDM), a mixture of two or more elastic rubber materials, and a mixture of an elastic rubber material and a synthetic resin.

### <Ink Absorber>

The ink absorber 23 is beneficially capable of being impregnated with ink. Specific examples of the ink absorber 23 include fiber bundle processed bodies (for example, a fusion-bonding processed body of a fiber bundle, a resin processed body of a fiber bundle, a resin processed body of felt, and a needle-punching processed body of felt) and porous bodies (for example, a continuous bubble body of synthetic resin, such as a sponge). The outer face of the ink absorber 23 may be coated with a synthetic resin film.

As illustrated in FIG. 10 or FIG. 11, the inner plug 27 is in axial contact with the contact wall 216 provided in the second shaft 21b. The rear end face of the ink absorber 23 is in axial contact with the contact wall provided in the first shaft 21a. The front end face of the ink absorber 23 is in axial contact with an end face of the inner plug 27. The longitudinal dimension of the ink absorber 23 is preferably larger than a longitudinal dimension between the contact wall and the inner plug 27. Thus, the ink absorber 23 in the shaft tube 21 is axially sandwiched between the contact wall and the inner plug 27, so that stable writing performance can be achieved.

### <Pen Tip>

As illustrated in FIG. 10, in the present embodiment, the pen tip 26 is axially engaged with the pen tip fitting hole of the first shaft 21a to be prevented from coming off. The attachment structure and attachment position of the pen tip 26 are not limited to the aspect of the present embodiment. For example, there may be applied an aspect in which the pen tip 26 is press-fitted into, engaged with, screwed onto, fitted into, glued onto, or two-color molded onto the outer face of the rear end of the shaft tube 21. As the writing portion, one end of the pen tip 26 protrudes outward from the front opening of the shaft tube 21. The other end of the pen tip 26 is connected to an end of the ink absorber 23 in a sticking manner. For example, as illustrated in FIG. 10, the writing portion is shaped into a chisel form. The writing portion is not limited to the chisel form, and may be shaped into other forms in accordance with the purpose, such as a bullet form, a rectangular form, a square prism form, and a plate form. The form of the writing instrument 20 according to the present invention is not limited to the example illustrated in the figure, but may be a double-headed writing instrument in which pen tips 26 having different forms may be respectively attached to both ends of the ink absorber 23. In this case, the soft member 22 is fitted to the top (on the closed end side) of the cap 24.

The pen tip 26 is a resin processed body of fiber (for example, a resin processed body of polyester fiber). As a writing portion, one end of the pen tip 26 protrudes to the outside, meanwhile the other end of the pen tip 26 is connected to one end of the ink absorber 23 in a sticking manner. The pen tip 26 beneficially allows ink to flow therethrough, and specific examples include pen tips that utilize capillary attraction, such as a fiber pen tip formed of a fusion bonding processed body of thermofusible fiber, a felt pen tip formed of a felt body, a plastic pen tip in which a plurality of filament resins (monofilament formed by extrusion molding of synthetic resin) is fusion-bonded to form an ink flow channel axially extending inside the pen tip, a pen tip (porous tip) formed of a porous body made of synthetic resin and having continuous bubbles, and a brush pen tip. Furthermore, the pen tip 26 may be a tip in which a ball is held by a ball holding portion formed by inwardly pressing and deforming a part near a tip of a metal pipe from the outer face, a tip in which a ball is held in a ball holding portion formed by cutting a metal material with a drill or the like, or a tip in which a resin ball holder is provided inside a metal or plastic tip. Note that, as the above-mentioned balls, there can be used a ball made of, for example, cemented carbide, stainless steel, ruby, ceramic, resin, or rubber, and having a diameter of 0.3 to 3.0 mm, preferably 0.3 to 1.5 mm, and more preferably 0.4 to 1.0 mm.

### <Ink>

In the present embodiment, the ink accommodated in the ink absorber 23 is a thermochromic ink. The thermochromic ink is preferably a reversible thermochromic ink. Various types of reversible thermochromic inks, such as a heat-decolorizing type that decolorizes by heating from a color-developed state; a color memory holding type that holds a color-developed state or a decolored state interchangeably within a specific temperature range; or a heat color-developing type that develops color by heating from a decolored state and returns from a color-developed state to the decolored state by cooling, can be used alone or in combination.

Preferred examples of a coloring agent contained in the reversible thermochromic ink include a reversible thermochromic pigment in which a reversible thermochromic composite containing at least three indispensable components, namely, (I) an electron-donating color-reactive organic compound, (II) an electron-accepting compound, and (III) a reactive medium that determines a temperature for causing a chemical bond reaction (color reaction) between the above-mentioned two compounds, is contained in a microcapsule.

Note that the ink used in the present invention is not limited to the thermochromic ink, and an ink composite other than the thermochromic ink can be used. For example, an ink for writing, a correction fluid, a liquid glue, or a cosmetic fluid is beneficially chosen in accordance with the application of a liquid-dispensing tool. The ink for writing is not limited to a particular ink, and may be an oil-based ink or a water-based ink, for example.

### <Sixth Embodiment>

FIG. 16 is a cross-sectional view taken along line B-B in the shaft tube 21 in FIG. 11, in which the shape of a barb portion 215 of the shaft tube 21 in a sixth embodiment according to the present invention is illustrated. The sixth embodiment according to the present invention is different from the fifth embodiment in the transverse cross-sectional shape of the barb portion 215. Specifically, a radially inward tip of the barb portion 215 has a sharply pointed transverse cross-section.

Other constituents in the sixth embodiment are approximately the same as those in the fifth embodiment, and therefore detailed descriptions thereof will be omitted. As illustrated in FIG. 16, according to the present embodiment, the barb portion 215 bites into the outer face of the soft member 22 circumferentially at equal intervals to more securely lock the soft member 22. Furthermore, since the radially inward tip of the barb portion 215 has a sharply pointed transverse cross-section, the barb portion 215 more deeply bites into the outer face of the soft member 22, whereby the soft member 22 is more firmly axially locked to be prevented from coming off.

The transverse cross-sectional shape of the tip of the barb portion 215 is not limited to a sharply pointed shape or the above-mentioned R shape, but may be other shapes suitable for the pen tip, such as a rectangular shape and an inverted R shape with a radially inward tip being recessed. The barb portion 215 may be a burr formed by resin entering a gap between mating faces of a mold (pin) when the shaft tube 21 is produced by injection molding.

### <Seventh Embodiment>

FIG. 17 is an enlarged longitudinal cross-sectional view of a main part of a seventh embodiment according to the present invention, in which a state after the fitting of the soft member 22 is illustrated. The seventh embodiment according to the present invention is different from the fifth embodiment in the shape of a portion located behind the first outer step portion 224 of the soft member 22. Specifically, as illustrated in FIG. 17, the soft member 22 includes: a locking groove 225 disposed behind the first outer step portion 224; and a second outer step portion 226 disposed at the rear end of the locking groove 225, in which the barb portion 215 is locked to the second outer step portion 226 and the soft member 22 is axially locked to be prevented from coming off. The locking groove 225 is preferably circumferentially formed on the small-diameter portion 223.

Other constituents in the seventh embodiment are approximately the same as those in the fifth embodiment, and therefore detailed descriptions thereof will be omitted. According to the present embodiment, as in the case of the fifth embodiment, when an axially forward force (that is, a force in a direction in which the soft member 22 comes off) is applied to the soft member 22 after the fitting of the soft member 22, a force acts on the barb portion 215 so that the barb portion 215 tends to return to the state before tilted. At this time, as illustrated in FIG. 17, the barb portion 215 gets caught on the second outer step portion 226 provided in the outer face of the small-diameter portion 223 to more securely prevent the soft member 22 from coming off after the fitting of the soft member 22. Since the locking groove 225 is circumferentially formed on the small-diameter portion 223, positioning the soft member 22 in the rotational direction becomes unnecessary when the soft member 22 is inserted into the shaft tube 21, so that the soft member 22 can be easily fitted.

### <Eighth Embodiment>

FIG. 18 is an enlarged longitudinal cross-sectional view of a main part of an eighth embodiment of the present invention, in which a state after the fitting of the soft member 22 is illustrated. The eighth embodiment according to the present invention is different from the seventh embodiment in the shape of a portion located in front of the small diameter hole portion 213 of the shaft tube 21. Specifically, as illustrated in FIG. 18, the large diameter hole portion 212 of the shaft tube 21 is omitted and the inner step portion 214 is provided at the front end of the shaft tube 21.

Furthermore, the eighth embodiment according to the present invention is different from the seventh embodiment in the shape of the outer face of the soft member 22. Specifically, as illustrated in FIG. 18, the soft member 22 includes: the locking groove 225 disposed in the surface of the small-diameter portion and behind the first outer step portion 224; and a second outer step portion 226 disposed at the rear end of the locking groove 225, and the friction portion 221 has a bullet shape. When the first outer step portion 224 of the soft member 22 comes into contact with the inner step portion 214, an air flow hole 227 is formed between the first outer step portion 224 and the inner step portion 214. Thus, air can flow smoothly, and hence, without air being compressed in the shaft tube during the fitting of the soft member 22, the soft member 22 can be fitted smoothly.

Other constituents in the eighth embodiment are approximately the same as those in the seventh embodiment, and therefore detailed descriptions thereof will be omitted. According to the present embodiment, even a front portion closer to the friction portion 221 of the soft member 22 can be sandwiched to enable stable friction.

The soft member attachment structure configured as described above works as follows.

The soft member attachment structure according to the present invention is configured such that the soft member 22 is fitted to the tail end of the shaft tube 21 or the closed end of the cap 24 of the writing instrument 20. The soft member fitting hole 211 is provided in the tail end of the shaft tube 21 or the closed end of the cap 24. The soft member 22 includes: the small-diameter portion 223; the large-diameter portion 222 disposed in front of the small-diameter portion 223; and the first outer step portion 224 disposed between the small-diameter portion 223 and the large-diameter portion 222. The soft member fitting hole 211 includes: the small-diameter hole portion 213; and the inner step portion 214 disposed in front of the small-diameter hole portion 213. The small-diameter portion 223 is fitted into or loosely fitted into the small-diameter hole portion 213. The first outer step portion 224 comes into contact with the inner step portion 214. The small-diameter hole portion 213 includes the barb portion 215 protruding from the inner face of the small-diameter hole portion 213. The barb portion 215 is deformable by contact with the small-diameter portion 223 at the time of the soft member fitting.

According to the present invention, the barb portion 215 is deformable by contact with the small-diameter portion 223 of the soft member 22 at the time of the soft member fitting, and therefore, the soft member 22 can be inserted smoothly without great resistance at the time of the fitting of the soft member 22. On the other hand, when an axially forward force (that is, a force in a direction in which the soft member 22 comes off) is applied to the soft member 22 after the soft member fitting, the barb portion 215 tends to recover the state before the soft member fitting (before soft member deformation), and accordingly the barb portion 215 bites into the outer face of the small-diameter portion 223 of the soft member 22 to securely lock the soft member 22. That is, the soft member 22 can be easily fitted, while the soft member 22 does not come off after fitted.

According to the present invention, the inner step portion 214 functions as a stopper capable of positioning for the soft member fitting, so that the soft member 22 can be easily fitted in a desired position. Furthermore, even when the user applies excessive force to the soft member 22 during the use of the soft member, the soft member 22 does not retract into the writing instrument 20.

The barb portion 215 is preferably disposed at the rear end of the inner face of the small-diameter hole portion 213. Thus, the small-diameter hole portion 213 functions as a guide for the insertion of the small-diameter portion 223, so that the small-diameter portion 223 can be more easily inserted into the small-diameter hole portion 213, hence the soft member 22 can be more easily fitted.

Preferably, the soft member fitting hole 211 further includes the large diameter hole portion 212 disposed in front of the inner step portion 214, and the large-diameter portion 222 is fitted into or loosely engaged in the large-diameter hole portion 212. Thus, a portion closer to the front of the soft member 22 can be sandwiched to enable stable friction.

Preferably, a plurality of the barb portions 215 is disposed circumferentially at equal intervals in the small-diameter hole portion 213, and the transverse cross-section of the tip of each of the barb portions 215 is R-shaped. Thus, the barb portions 215 bite into the outer face of the soft member 22 circumferentially at equal intervals to more securely lock the soft member 22. Since the transverse cross-section of the tip of the barb portion 215 is R-shaped, the barb portion 215 can be easily formed.

Preferably, the soft member 22 includes: the locking groove 225 disposed behind the first outer step portion 224; and the second outer step portion 226 disposed at the rear end of the locking groove 225, and the barb portion 215 is locked to the second outer step portion 226, and the soft member 22 is axially locked to be prevented from coming off. Thus, when an axially forward force (that is, a force in a direction in which the soft member 22 comes off) is applied to the soft member 22 after the soft member fitting, a force acts on the barb portion 215 so that the barb portion 215 tends to return to the state before tilted. At this time, the barb portion 215 gets caught on the second outer step portion 226 provided in the outer face of the small-diameter portion 223 to more securely prevent the soft member 22 from coming off after the soft member fitting.

Furthermore, a target of the present invention is only the shaft tube 21 of the writing instrument 20 described above. That is, the shaft tube 21 of the writing instrument 20 includes the soft member fitting hole 211, in which the soft member 22 is fitted in the front end of the shaft tube 21. The outer face of the soft member 22 includes: the large-diameter portion 222; the small-diameter portion 223 disposed behind the large-diameter portion 222; and the first outer step portion 224 disposed between the large-diameter portion 222 and the small-diameter portion 223. The inner face of the soft member fitting hole 211 includes: the large-diameter hole portion 212; and the small-diameter hole portion 213 disposed behind the large-diameter hole portion 212; and the inner step portion 214 provided between the large-diameter hole portion 212 and the small-diameter hole portion 213. The small-diameter portion 223 is fitted into or loosely fitted into the small-diameter hole portion 213. The first outer step portion 224 comes into contact with the inner step portion 214. The small-diameter hole portion 213 includes the barb portion 215 protruding from the inner face of the small-diameter hole portion 213. The barb portion 215 is deformable by contact with the small-diameter portion 223 at the time of the soft member fitting. Thus, the soft member 22 can be easily fitted, while the soft member 22 does not come off after the fitting of the soft member 22 and the soft member 22 does not retract into the writing instrument 20 during rubbing.

Furthermore, the present invention provides a writing instrument including the above-described soft member attachment structure and characterized by forming thermochromic handwriting. Furthermore, the present invention provides a soft member characterized by constituting the above-described soft member attachment structure, together with the soft member fitting hole 211.

### <Ninth to Eleventh Embodiments>

Hereinafter, ninth to eleventh embodiments according to the present invention will be described with reference to the drawings. Note that, in attachment structures of the ninth to eleventh embodiments, the term "front" refers to an end 321 side of a second component 32, and the term "rear" refers to a side opposite to the end 321 side.

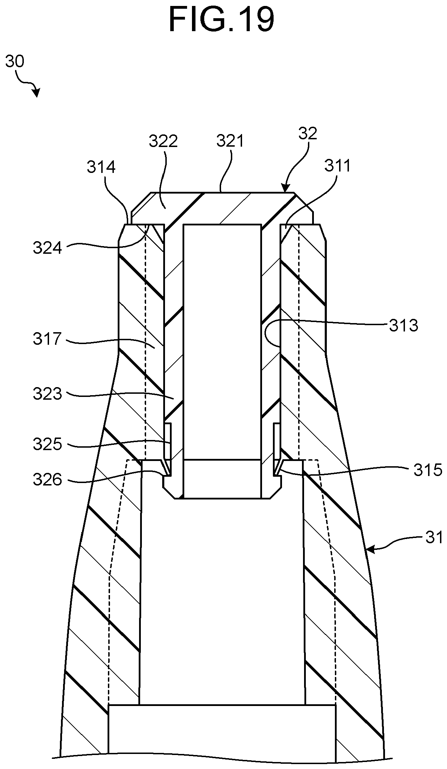

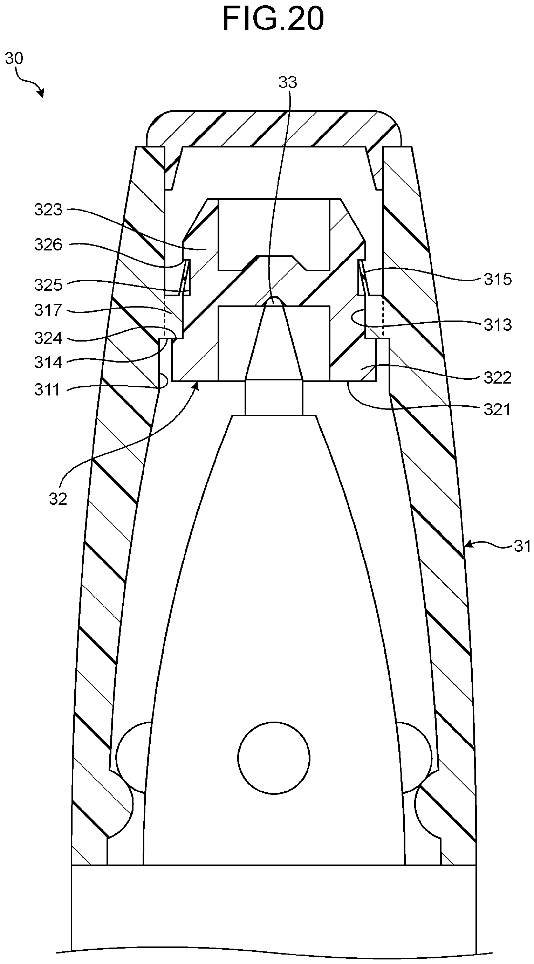

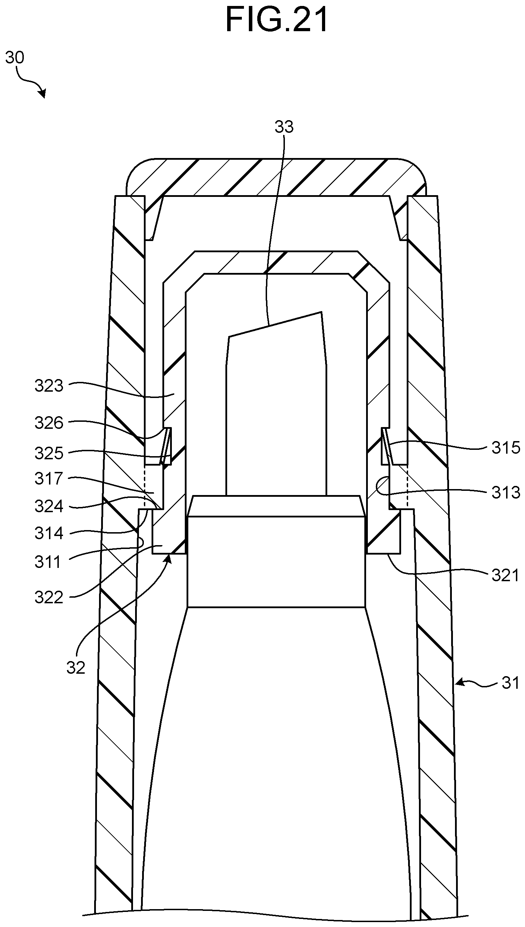

FIG. 19 is a schematic longitudinal cross-sectional view of a part of a writing instrument 30 in the ninth embodiment according to the present invention. FIG. 20 is a schematic longitudinal cross-sectional view of a part of the writing instrument 30 in the tenth embodiment according to the present invention. FIG. 21 is a schematic longitudinal cross-sectional view of a part of the writing instrument 30 in the eleventh embodiment according to the present invention. In FIG. 19, the upper side of the figure indicates the front side, and the lower side of the figure indicates the rear side. In FIGS. 20 and 21, the upper side of each of the figures indicates the rear side, and the lower side of each of the figures indicates the front side.

In any of the ninth to eleventh embodiments, the present invention provides an attachment structure in which the second component 32 is attached to a fitting hole 311 provided at an end of a first component 31. For example, as in the case of the first to eighth embodiments, the writing instrument 30 in the ninth to eleventh embodiments mainly includes, a cap, a pen tip, an ink absorber, a shaft tube, and a soft member.

The writing instrument 30 includes the first component 31 and the second component 32. In the ninth embodiment illustrated in FIG. 19, the first component 31 is the shaft tube or the cap of the writing instrument 30, and the second component 32 is a tail plug of the shaft tube or a cap top of the cap. In the tenth embodiment illustrated in FIG. 20, the first component 31 is a cap and the second component 32 is a rubber seal. In the eleventh embodiment illustrated in FIG. 21, the first component 31 is a cap and the second component 32 is an inner cap.

The first component 31 is a cylindrical body having an open end and produced by injection molding or extrusion molding of synthetic resin. The fitting hole 311 is provided in the first component 31. A large-diameter portion 322 of the second component 32 is fitted into the fitting hole 311. Examples of the synthetic resin material may include synthetic resins, such as polypropylene, polyethylene, polystyrene, polycarbonate, polyethylene terephthalate, polyacetal, acrylic, nylon, acrylonitrile-styrene copolymer resin (AS resin), and acrylonitrile-butadiene-styrene copolymer resin (ABS resin).

The fitting hole 311 includes, in the inner face thereof: a small-diameter hole portion 313; and an inner step portion 314 connected to the small-diameter hole portion 313 and being perpendicular to the axis. A small-diameter portion 323 of the second component 32 is fitted into or loosely fitted into the small-diameter hole portion 313. The fitting hole 311 may further include a large-diameter hole portion in the inner face thereof. In this case, the large-diameter portion 322 of the second component 32 is fitted into or loosely fitted into the large-diameter hole portion.

The small-diameter hole portion 313 includes a barb portion 315 protruding radially inward from the inner face of the small-diameter hole portion 313. The barb portion 315 is deformable by contact with the small-diameter portion 323 at the time of the fitting of the second component 32. That is, in the present embodiment, when the second component 32 is inserted, the barb portion 315 is tilted axially rearward by the outer face of the small-diameter portion 323 of the second component 32. Thus, the small-diameter portion 323 can be easily inserted. That is, the second component 32 can be inserted smoothly without great resistance at the time of the fitting of the second component 32.

On the other hand, when an axially forward force (that is, a force in a direction in which the second component 32 comes off) is applied to the second component 32 after the fitting of the second component 32, a force acts on the barb portion 315 so that the barb portion 315 tends to return to the state before tilted. In other words, the barb portion 315 tends to recover the state before the fitting of the second component 32 (before the deformation of the barb portion 315). Thus, the barb portion 315 gets caught on a second outer step portion 326 provided in the outer face of the small-diameter portion 323 of the second component 32 described later, whereby the second component 32 can be more securely prevented from coming off after the fitting of the second component 32. That is, the second component 32 is easily fitted, while the second component 32 does not come off after fitted. The barb portion 315 may bite into the outer face of the small-diameter portion 323 of the second component 32 to lock the second component 32.

In the present embodiment, the barb portion 315 is provided at the rear end of the inner face of the small-diameter hole portion 313. Thus, the small-diameter hole portion 313 functions as a guide for the insertion of the small diameter portion 323, so that the small-diameter portion 323 can be more easily inserted into the small-diameter hole portion 313, hence the second component 32 can be more easily fitted.

In the present embodiment, a plurality of the barb portions 315 is disposed circumferentially at equal intervals in the small-diameter hole portion 313, and the transverse cross-section of the radially inward tip of each of the barb portions 315 is R-shaped. The barb portions 315 may be disposed at unequal intervals. At least one barb portion 315 is beneficially formed and bites into the outer face of the small-diameter portion 323. The dimensions of the barb portion 315 can be set to be approximately the same as those of the barb portions 115, 215 of the first to eighth embodiments.

A plurality of (specifically, eight) air flow grooves 317 extending in the axial direction is disposed at equal intervals in the inner face of the small-diameter hole portion 313. The air flow grooves 317 form an air flow channel extending in the axial direction between the outer face of the second component 32 and the inner face of the first component 31. Thus, air can flow smoothly, whereby, without air being compressed in the shaft tube at the time of the fitting of the second component 32, the second component 32 can be smoothly fitted.

When the second component 32 is fitted, the inner step portion 314 comes into contact with a first outer step portion 324 of the later-described second component 32. Thus, the inner step portion 314 functions as a stopper capable of positioning for the fitting of the second component 32, so that the second component 32 can be easily fitted in a desired position. In addition, even when the user applies excessive force to the second component 32, the second component 32 does not retract into the writing instrument 30.

The second component 32 includes, in the outer face thereof: the large-diameter portion 322; the small-diameter portion 323 disposed behind the large-diameter portion 322; and the first outer step portion 324 disposed between the large-diameter portion 322 and the small-diameter portion 323. The large-diameter portion 322 has a columnar or cylindrical shape. The small-diameter portion 323 has a cylindrical shape. When the second component 32 is fitted, the first outer step portion 324 comes into contact with the inner step portion 314 of the fitting hole 311. The second component 32 is made from synthetic resin. The kind of the synthetic resin can be suitably determined in accordance with the use of the second component 32.

The second component 32 includes: the locking groove 325 disposed behind the first outer step portion 324; and the second outer step portion 326 disposed at the rear end of the locking groove 325, and the barb portion 315 is locked to the second outer step portion 326, and the second component 32 is axially locked to be prevented from coming off. The locking groove 325 is preferably formed circumferentially in the small-diameter portion 323.

The second component 32 (a tail plug or a cap top) according to the ninth embodiment closes an end of the first component 31. The second component 32 (rubber seal) according to the tenth embodiment seals a pen tip 33 of a ballpoint pen. The second component 32 (inner cap) of the eleventh embodiment prevents ink from evaporating from the pen tip 33 of a fluorescent pen.

As in the case of the first to eleventh embodiments described above, the first component according to the present invention can be various components of a writing instrument, such as a writing instrument body, a shaft tube, and a cap. The second component according to the present invention can also be various components of writing instruments, such as a pen tip, a soft member, a tail plug, a cap top, a rubber seal, and an inner cap. In the present invention, the terms "front" and "rear" can vary depending on the first and second components.

### EXPLANATIONS OF LETTERS OR NUMERALS

10, 20, 30 writing instrument
11, 21 shaft tube
31 first component
11a front shaft
11b rear shaft
21a first shaft
21b second shaft
111 pen tip fitting hole
211 soft member fitting hole
311 fitting hole
112, 212 large-diameter hole portion
113, 213, 313 small-diameter hole portion
114, 214, 314 inner step portion
115, 215, 315 barb portion
116, 216 contact wall
117, 217, 317 air flow groove
12 pen tip
22 soft member
32 second component
121 writing portion
221 friction portion
321 end
122, 222, 322 large-diameter portion
123, 223, 323 small-diameter portion
124, 224, 324 first outer step portion
125, 225, 325 locking groove
126, 226, 326 second outer step portion
127, 227 air flow hole
13, 23 ink absorber
33 pen tip
14, 24 cap
15, 25 airtight member
16 soft member
26 pen tip
27 inner plug

## Claims

1. An attachment structure in a writing instrument, comprising:
a first component; and
a second component configured to be fitted into a fitting hole provided at an end of the first component, wherein
the second component includes: a small-diameter portion; a large-diameter portion disposed in front of the small-diameter portion; and a first outer step portion disposed between the small-diameter portion and the large-diameter portion,
the fitting hole includes: a small-diameter hole portion; and an inner step portion disposed in front of the small-diameter hole portion,
the small-diameter portion is fitted into or loosely fitted into the small-diameter hole portion,
the first outer step portion comes into contact with the inner step portion, and
the small-diameter hole portion includes a barb portion protruding from an inner face of the small-diameter hole portion, and the barb portion is deformable by contact with the small-diameter portion when the second component is fitted.

2. The attachment structure according to claim 1, wherein the barb portion is disposed at a rear end of the inner face of the small-diameter hole portion.

3. The attachment structure according to claim 1, wherein
the fitting hole further includes a large-diameter hole portion disposed in front of the inner step portion, and
the large-diameter portion is fitted into or loosely engaged in the large-diameter hole portion.

4. The attachment structure according to claim 1, wherein the barb portion includes a plurality of barb portions disposed circumferentially at equal intervals in the small-diameter hole portion.

5. The attachment structure according to claim 1, wherein a transverse cross-section of a tip of the barb portion is R-shaped.

6. The attachment structure according to claim 1, wherein
the second component further includes: a locking groove behind the first outer step portion; and a second outer step portion at a rear end of the locking groove, the barb portion is locked to the second outer step portion, and the second component is axially locked to be prevented from coming off.

7. The attachment structure according to any of claims 1 to 6, wherein
the first component is a writing instrument body,
the second component is a pen tip, and
the fitting hole is disposed in a front part of the writing instrument body.

8. The attachment structure according to any of claims 1 to 6, wherein
the first component is a shaft tube or a cap of the writing instrument,
the second component is a soft member, and
the fitting hole is disposed at a tail end of the shaft tube or a closed end of the cap.

9. A writing instrument comprising the attachment structure according to claim 8 and configured to form thermochromic handwriting.

10. A soft member configured to constitute the attachment structure according to claim 8, together with the fitting hole.
